# EUROPÄISCHE PATENTSCHRIFT

(11) **EP 1 721 812 B1**
(45) Veröffentlichungstag und Bekanntmachung des Hinweises auf die Patenterteilung: **07.01.2009**
(21) Anmeldenummer: 06009511.4
(22) Anmeldetag: 09.05.2006
(51) Int. Cl.: B62D 33/02, B60P 7/04

(54) **Zwischenlager-Vorrichtung für Lkw-Planen-Bretter**
Storage device for the side planks of a loading vehicle
Dispositif de stockage pour les planches latérales d'un camion

(30) Priorität: 11.05.2005 DE 202005007722 U
(43) Veröffentlichungstag der Anmeldung: 15.11.2006
(73) Patentinhaber: Raab, Rudolf, 91578 Leutershausen (DE)
(72) Erfinder: Raab, Rudolf, 91578 Leutershausen (DE)
(74) Vertreter: Hübner, Gerd

(56) Entgegenhaltungen:
- DE-A1- 3 138 338
- DE-U1- 8 801 138

## Beschreibung

Die Erfindung betrifft eine Zwischenlager-Vorrichtung für Lkw-Planen-Bretter, zur Verwandung bei Lkw der Art wie in der DE 3 138 338 A offenbart.

Moderne Lkw mit an beiden Längsseiten zum Be- und Entladen mithilfe eines Gabelstaplers komplett freilegbarer Ladefläche weisen zur Sicherung des Ladegutes und als Dachträger seitliche Vertikalstützen auf, die in Fahrzeuglängsrichtung zwischen sich jeweils ein Ladefeld der Ladefläche bilden. Zwischen zwei ein solches Ladefeld begrenzenden Vertikalstützen werden auf verschiedenen Höhen mehrere, üblicherweise als "Planen-Bretter" bezeichnete Sicherungsplanken in entsprechende Stecklaschen eingehängt. Außen auf diesen Planen-Brettern liegt dann die eigentliche Lkw-Plane auf, die am Lkw-Aufbau geeignet fixiert wird.

Für das Be- und Entladen eines solchen Planen-Lkws öffnet der Fahrer an der Umschlagstelle den Lkw-Aufbau durch Entfernen der Plane. Anschließend müssen die Planen-Bretter zur Zugänglichmachung des jeweiligen Ladefeldes aus den Stecklaschen ausgehängt und weggelegt werden. Für die völlige Freilegung der Ladefläche beispielsweise eines Sattelaufliegers mit 4 Ladefeldern müssen pro Ladefeld beiderseits etwa 3 bis 5, also insgesamt 24 bis 40 Bretter entnommen und in geeigneter Weise, beispielsweise unter dem Sattelauflieger weggestapelt werden. Dann kann das z.B. auf Paletten auf der Ladefläche transportierte Ladegut mithilfe eines Gabelstaplers abgeladen werden. Muss der Lkw dann anschließend zu einer anderweitig gelegenen Beladerampe umgesetzt werden, müssen die Planen-Bretter aufgeladen und an der Beladerampe wieder abgeladen werden. Dies ist umständlich und zeitaufwendig.

Ferner besteht die Problematik, dass bei Unachtsamkeit oder großem Zeitdruck der Lkw-Fahrer die Planen-Bretter vergisst oder gar überfährt, sodass letztere beschädigt werden.

Ausgehend von der geschilderten Problematik liegt der Erfindung die Aufgabe zugrunde, den Umgang mit den Lkw-Planen-Brettern beim Be- und Entladen wesentlich rationeller zu gestalten.

Diese Aufgabe wird laut Schutzanspruch 1 durch eine Zwischenlager-Vorrichtung für diese Lkw-Planen-Bretter gelöst, die unterhalb des in Fahrtrichtung weisenden Längsrandes der Lkw-Ladefläche positionierbare Aufnahmen aufweist. Diese können eine Anzahl von Planen-Bretter in Fahrtrichtung weisend zur Zwischenlagerung während des Be- und Entladens des Lkws aufnehmen. Bei der Handhabung der Planen-Bretter muss der Lkw-Fahrer oder das Ladepersonal lediglich die Planen-Bretter aus ihrer Stecklasche vor dem Ladegut aushängen, in gleicher Grundrichtung nach unten führen und in die entsprechende Aufnahme unterhalb der Ladefläche einsetzen. Die Planen-Bretter sind damit sicher verwahrt, können nicht durch Überfahren beschädigt und nicht vergessen werden. Insbesondere können die Planen-Bretter während des Umsetzens des Lkw von einer Entlade- zu einer Beladestelle in ihren Aufnahmen verbleiben, benötigen also bei diesem Zwischenschritt keinerlei Handgriff. Nach dem Beladen des Lkws werden die Planen-Bretter bequem aus der entsprechenden Aufnahme entnommen, nach oben gehoben und in die entsprechenden Stecklaschen wieder eingesetzt.

Bevorzugte Ausführungsformen mit entsprechenden weiteren Merkmalen, Einzelheiten und Vorteilen der Erfindung ergeben sich aus den Unteransprüchen und der nachfolgenden Beschreibung, in der ein Ausführungsbeispiel des Erfindungsgegenstandes anhand der beigefügten Zeichnungen näher erläutert wird. Es zeigen:
- Fig. 1: eine ausschnittsweise Perspektivansicht eines Lkw-Sattelaufliegers,
- Fig. 2: einen Vertikalschnitt durch eine erste Ausführung einer Zwischenlager-Vorrichtung für Planen-Bretter in ausgefahrener Aktivstellung,
- Fig. 3: einen Vertikalschnitt der Zwischenlager-Vorrichtung gemäß Fig. 2 in der eingeschobenen Passivstellung,
- Fig. 4: einen Horizontalschnitt durch die Zwischenlager-Vorrichtung entlang der Schnittlinie III-III nach Fig. 3 in Passivstellung,
- Fig. 5: eine Seitenansicht quer zur Fahrtrichtung einer zweiten Ausführungsform einer Zwischenlager-Vorrichtung in ausgefahrener Aktivstellung der Aufnahmebügel,
- Fig. 6: einen Vertikalschnitt der Zwischenlager-Vorrichtung gemäß der Schnittlinie VI-VI nach Fig. 5 in Passivstellung des Aufnahmebügels,
- Fig. 7: eine Seitenansicht einer dritten Ausführungsform einer Zwischenlager-Vorrichtung in hochgeklappter Passivstellung des Aufnahmebügels,
- Fig. 8: einen schematischen Vertikalschnitt quer zur Fahrtrichtung der Zwischenlager-Vorrichtung gemäß Fig. 7 in Passivstellung,
- Fig. 9: einen Schnitt analog Fig. 8 in einer Zwischenstellung, und
- Fig. 10: einen Schnitt analog Fig. 8 in der heruntergeklappten Aktiv-Stellung der Aufnahmebügel.

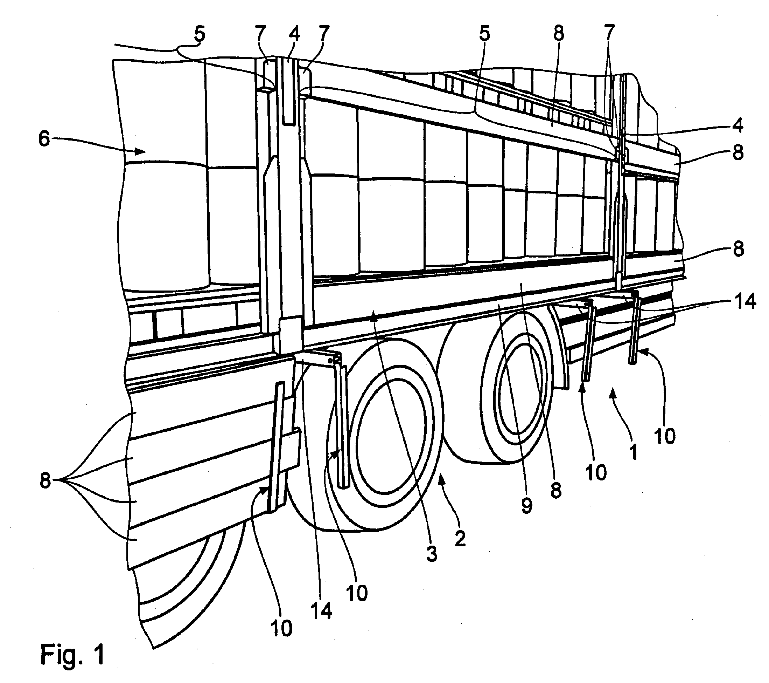

Der in Fig. 1 gezeigte Sattelauflieger 1 mit Fahrwerk 2 weist eine Ladefläche 3 auf, die durch randseitig senkrecht hochstehende Stützen 4 in Ladefelder 5 eingeteilt ist. Auf der Ladefläche 3 stehen als Ladegut 6 auf Paletten übereinander gestapelte Fässer.

Über die Höhe der Stützen 4 verteilt sind daran jeweils Stecklaschen 7 angebracht, in die von oben jeweils ein Planen-Brett 8 als Ladegutsicherung und Abstützung für die nicht dargestellte Lkw-Plane zur Innenseite hin eingehängt werden können.

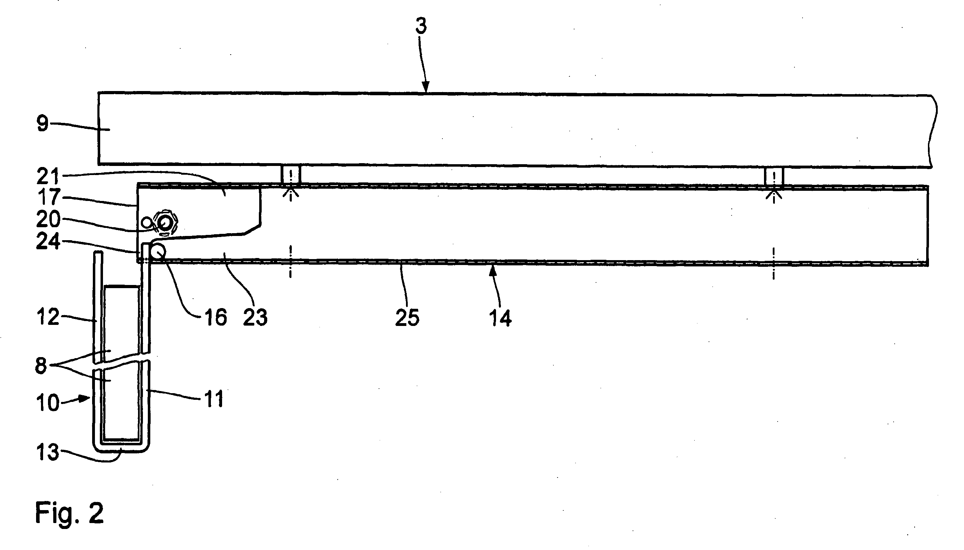

Zum Be- und Entladen des Ladeguts 6 sind die Planen-Bretter 8 wegzunehmen. Um diese für den Be- und Entladevorgang definiert aufzubewahren, ist eine Zwischenlager-Vorrichtung vorgesehen, die aus unterhalb des Längsrandes 9 der Ladefläche 3 angeordnete Aufnahmen in Form von U-förmigen Aufnahmebügeln 10 gebildet ist. Pro Ladefeld 5 sind jeweils zwei Aufnahmebügel 10 in der Nähe des vorderen bzw. hinteren Endes des Ladefeldes 5 angeordnet. Diese Aufnahmebügel 10 aus Flachstahl bestehen aus in der Aktivstellung (Fig. 1 und 2) vertikal verlaufenden Schenkeln 11, 12, die durch eine schmale Basis 13 miteinander verbunden sind. Der Abstand der Schenkel 11, 12 zueinander ist so ausgelegt, dass die Planen-Bretter 8 hochkant Seite an Seite von oben in Fahrtrichtung weisend, also im Wesentlichen in der gleichen Grundstellung, wie sie in den Stecklaschen 7 sitzen, in die Aufnahmebügel 10 eingeschoben werden können. Dies ist bei dem in Fig. 1 linken, teilweise gezeigten Ladefeld 5 dargestellt, wo die vier zu diesem Ladefeld 5 gehörenden Planen-Bretter 8 in einem Paar von Aufnahmebügeln 10 zwischengelagert sind.

Die Aufnahmebügel 10 könnten in einer einfachen Ausführungsform aus der in Fig. 1 gezeigten Aktivstellung über ein Klappgelenk nach innen, vorne oder hinten in eine Passivstellung weggeklappt werden. Eine bevorzugte Ausführungsform für die Verwahrung der Aufnahmebügel 10 ist jedoch in den Fig. 2 bis 4 gezeigt.

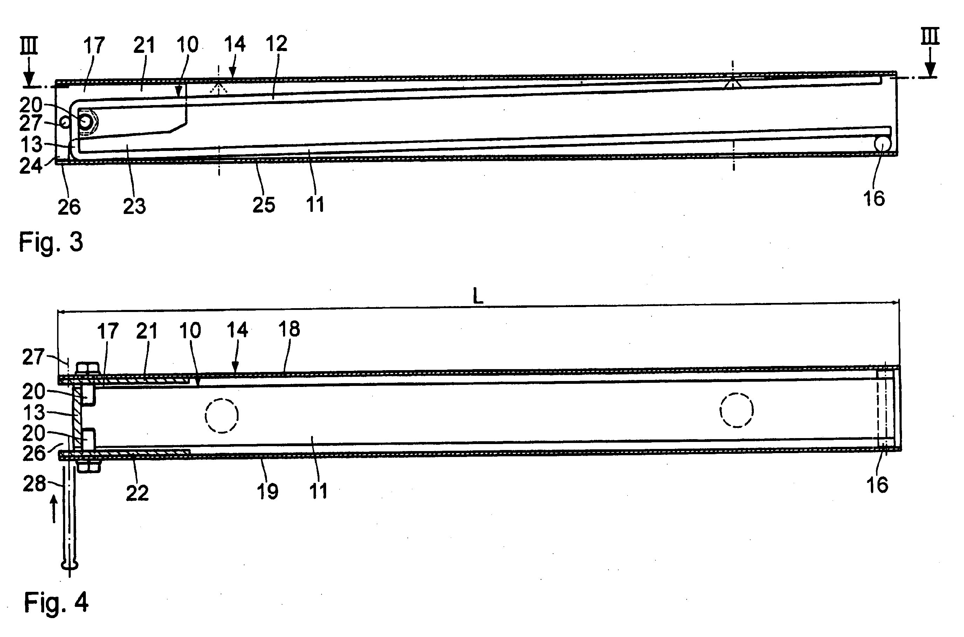

Wie daraus hervorgeht, ist jeder Aufnahmebügel 10 über eine Lagerhülse 14 in Form eines beidseitig offenen Vierkant-Rohres an den Lkw unter der Ladefläche 3 angebunden. Die Lagerhülse 14 weist eine Länge L auf, die etwas größer als die Länge der Bügelschenkel 11, 12 ist. Ferner ist der lichte Querschnitt der Lagerhülse 14 ebenfalls etwas größer als der Außenquerschnitt der Schenkel 11, 12, sodass der Aufnahmebügel 10 komplett in der Lagerhülse 14 verwahrt werden kann, wie dies in Fig. 3 und 4 gezeigt ist.

Der in der Passivstellung unten bzw. in der Aktivstellung (Fig. 2) innen liegende Schenkel 11 ist an seinem freien Ende mit einem Schwenkbolzen 16 versehen, der beidseitig über die Schenkelbreite etwas hinaussteht. Ferner ist am Mündungsende 17 der Lagerhülse 14 an den beiden vertikalen Seitenwänden 18, 19 der Lagerhülse 14 mittels nach innen durchstehender Schrauben 20 jeweils ein Anschlagblech 21, 22 befestigt, das an seinem unteren Rand mit einer Führungsausnehmung 23 versehen ist. Diese endet an einem vom jeweiligen Anschlagblech 21, 22 gebildeten, nasenförmigen Schwenkanschlag 24. Dieser wirkt mit dem seitlich über den Schenkel 12 hinausstehenden Schwenkbolzen 16 zusammen, sodass der Aufnahmebügel 10 horizontal bis zu diesem Schwenkanschlag 24 herausgezogen werden kann. Anschließend kann der Aufnahmebügel 10 um dieses Schwenklager nach unten geklappt werden. Der innere Schenkel 11 läuft dabei durch eine auf Höhe des Schwenkanschlags 24 in die Unterseite 25 der Lagerhülse 14 eingeformte Randausnehmung 26.

Die nach innen über die Anschlagbleche 21, 22 hinausstehenden Schrauben 20 dienen übrigens auch als Anschlag für die Einschubbewegung der Aufnahmebügel 10 (siehe Fig. 3). Während der Fahrt des Lkw kann der Aufnahmebügel 10 in der in Fig. 2 und 3 gezeigten Stellung durch einen horizontal in Stecköffnungen 27 im Mündungsende 17 einzusetzenden Federstift 28 gegen ein unbeabsichtigtes Herausfallen gesichert werden. Wie aus Fig. 3 erkennbar wird, sitzt in dieser gesicherten Stellung die Basis 13 und damit der Aufnahmebügel 10 selbst fest zwischen den Schrauben 20 und dem Federstift 28.

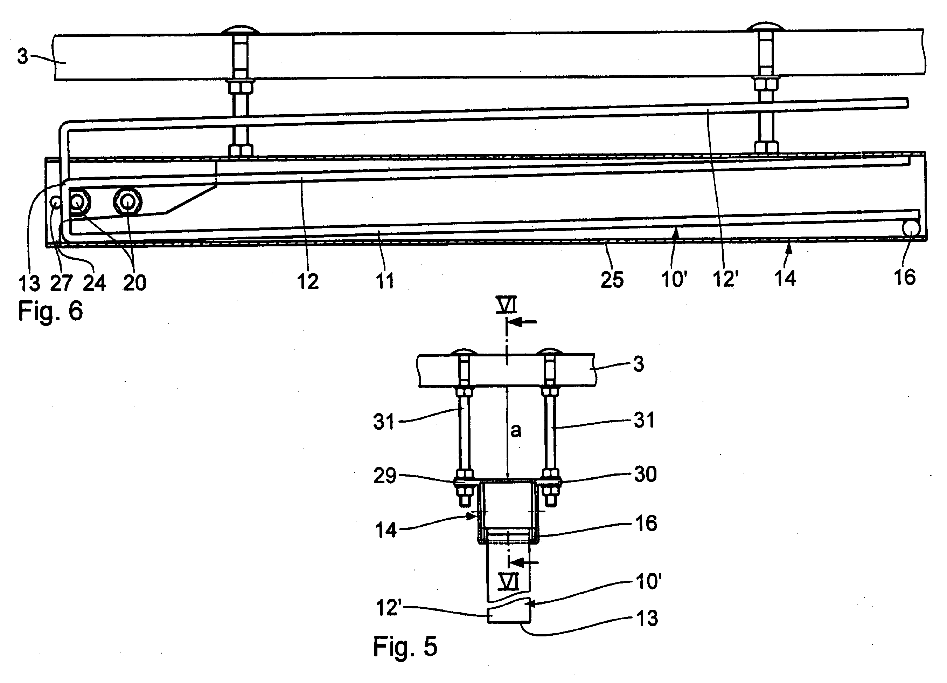

Die in den Fig. 5 und 6 gezeigte Ausführungsform der Zwischenlager-Vorrichtung für Planen-Bretter 8 unterschiedet sich von der Version gemäß den Fig. 1 bis 4 im Wesentlichen dadurch, dass der an sich U-förmige Aufnahmebügel 10' neben dem inneren Schenkel 11 zwei äußere Schenkel 12, 12' aufweist, sodass die Planen-Bretter (in Fig. 5 und 6 nicht dargestellt) in zwei Reihen hintereinander eingesteckt werden können. Dies kann dann notwendig werden, wenn beispielsweise eine große Anzahl von Planen-Brettern pro Ladefeld 5 zu verstauen sind oder die Planen-Bretter eines benachbarten Ladefeldes 5 mit hier untergebracht werden müssen. Dies kann beispielsweise bei Sattelauflegem 1 im Bereich der Drehbühne notwendig werden, da dort keine Aufnahmebügel 10' seitlich nach unten abragen dürfen. Andernfalls wäre der Sattelzug mit abgeklappten Bordwänden und Aufnahmebügeln 10' auf einem Speditionshof nicht rangierfähig.

Wie aus Fig. 5 hervorgeht, ist zur Aufnahme des Doppelbügels 10' eine "abgehängte" Befestigung der Lagerhülse 14 vorgesehen. Dazu sind zwei seitliche Längsflansche 29, 30 an der Basis der Lagerhülse 14 angeformt. Über diese wird die Lagerhülse 14 dann über Tragschrauben 31 an der Ladefläche 3 in einem Höhenabstand a befestigt. Wie aus Fig. 6 hervorgeht, wird der Doppelbügel 10' so in die Lagerhülse 14 eingeschoben, dass der innere Schenkel 11 und der benachbarte äußere Schenkel 12 - wie bei der Ausführungsform gemäß den Fig. 1 bis 4 - in der Lagerhülse 14 zu liegen kommen. Der äußere Außenschenkel 12' fährt in den durch den Höhenabstand a geschaffenen Raum zwischen der Ladefläche 3 und der Lagerhülse 14 ein. Die Fixierung und Überführung des Doppelbügels 10' aus der in Fig. 6 gezeigten Passivstellung in die in Fig. 5 gezeigte Aktivstellung erfolgt analog dem Aufnahmebügel 10 gemäß den Fig. 1 bis 4. Übereinstimmende Bauteile sind dabei mit identischen Bezugszeichen versehen und bedürfen keiner nochmaligen Erörterung.

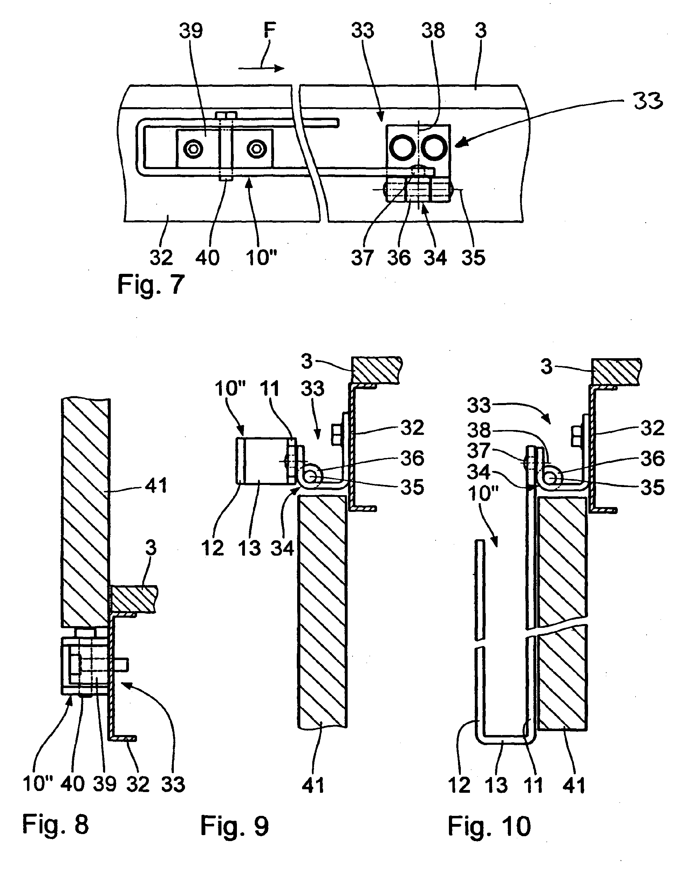

Aus den Fig. 7 bis 10 geht eine Ausführungsform für die Zwischenlager-Vorrichtung hervor, die insbesondere für solche Lkw geeignet ist, bei denen eine Verwahrung des Aufnahmebügels 10, 10' unter der Ladefläche 3 beispielsweise aufgrund anderer Einbauten problematisch ist. Wie aus Fig. 7 hervorgeht, wird nun bei dieser Ausführungsform der Aufnaluxaebügel 10" an eine üblicherweise unterhalb des Ladeniveaus am Seitenrand der Ladefläche 3 vorhandene Längstraverse 32 angeschlagen. Zur Halterung des Aufnahmebügels 10" dient dabei ein Schwenklagerbock 33, der das Ende des Aufnahmebügels 10" am inneren Schenkel 11 in einem Doppelgelenk lagert. Letzteres ist gebildet durch das Scharnier 34 mit der horizontal in Fahrtrichtung F weisenden, fahrzeugfesten Schwenkachse 35 und dem am Schwenkteil 36 des Scharniers angeordneten Schwenkbolzen 37, der die zweite, zur Schwenkachse 35 senkrechte Schwenkachse 38 definiert. Die Bedienung des Aufnahmebügels 10" gemäß den Fig. 7 bis 10 ist damit wie folgt:

In Fig. 7 und 8 ist die Passivstellung gezeigt, in der der Aufnahmebügel 10" hochgeklappt und in eine nach hinten entgegen der Fahrtrichtung F weisende horizontale Stellung verbracht ist. In dieser liegt er auf einem Stützblock 39 auf. Letzterer und die beiden Schenkel 11, 12 des Aufnahmebügels 10" weisen (nicht dargestellte) miteinander fluchtende Bohrungen auf, durch die ein Sicherungsbolzen 40 von oben hindurch gesteckt ist. Damit ist der Aufnahmebügel 10" vor einem Wegklappen von dem Stützblock 39 gesichert. Um ein unbeabsichtigtes Entfernen des Bolzens 40 zu verhindern, ist dieser so angeordnet, dass eine hochgeschwenkte Bordwand 41 (Fig. 8) oberhalb des Kopfes des Bolzens (40) steht und dieser nicht nach oben herausgezogen werden kann.

Nach dem Abklappen der Bordwand 41 (Fig. 9) und der Entnahme des Bolzens 40 kann der Aufnahmebügel 10" seitlich um die Schwenkachse 35 herausgeklappt (siehe Fig. 9) und anschließend um die zweite Schwenkachse 38 nach unten abgeklappt werden (Fig. 10). In dieser Stellung können wieder Planen-Bretter 8 in den Aufnahmebügel 10" von oben eingesetzt werden. Das Rückführen und Sichern des Aufnahmebügels 10" in der Passivstellung erfolgt dann in umgekehrter Reihenfolge.

Zusammenfassend weist die erfindungsgemäße Zwischenlager-Vorrichtung eine Vielzahl von Vorteilen auf:
- Es ergibt sich eine deutliche Zeitersparnis beim Be- und Entladen eines Lkw.
- Die damit erreichbare Verkürzung der Lkw-Standzeit führt zu Kosteneinsparungen.
- Da dem Lkw-Fahrer mühselige Handgriffe zum Hin- und Herschlichten der Planen-Bretter erspart bleiben, führt dies zu einer Erhöhung der lenkzeit-relevanten Pausenzeiten.
- Die Bretter werden gegen ein Überfahren durch den Lkw selbst oder durch andere Fahrzeuge, wie dem Be- und Entlade-Stapler geschützt.
- Zusätzlich schützen die vorgehängten Planen-Bretter den Lkw gegen eine Kollision mit dem Be- und Entlade-Fahrzeug (Gabelstapler).

## Patentansprüche

1. Zwischenlager-Vorrichtung für Lkw-Planen-Bretter (8), bei der unterhalb des Längsrandes der Lkw-Ladefläche (3) positionierbare Aufnahmen (10) vorgesehen sind, die eine Anzahl von Planen-Bretter (8) in Fahrtrichtung weisend zur Zwischenlagerung während des Be- und Entladens des Lkw aufnehmen können.

2. Zwischenlager-Vorrichtung nach Anspruch 1, **dadurch gekennzeichnet, dass** ein Paar von Aufnahmen (10) jeweils einem Ladefeld (5) der Ladefläche (3) zugeordnet ist und die in diesem Ladefeld (5) vorhandene Anzahl von Planen-Brettern (8) zur Zwischenlagerung aufnimmt.

3. Zwischenlager-Vorrichtung nach Anspruch 1 oder 2, **dadurch gekennzeichnet, dass** die Aufnahmen jeweils als U-förmige Aufnahmebügel (10) mit schmaler Basis (13) ausgebildet sind, zwischen deren Schenkeln (11,12) die Planen-Bretter (8) hochkant Seite an Seite einsteckbar sind.

4. Zwischenlager-Vorrichtung nach einem der vorgenannten Ansprüche, **dadurch gekennzeichnet, dass** die Aufnahmen (10) eine Aktivstellung zur Zwischenlagerung der Planen-Bretter (8) beim Be- und Entladen des Lkw und eine Passivstellung während dessen Transportfahrt aufweisen.

5. Zwischenlager-Vorrichtung nach Anspruch 4, **dadurch gekennzeichnet, dass** die Aufnahmen (10) zwischen einer nach unten geklappten Aktivstellung und einer nach oben unter die Ladefläche (3) weggeklappten Passivstellung verschwenkbar am Lkw montierbar sind.

6. Zwischenlager-Vorrichtung nach Anspruch 4 und 5, **dadurch gekennzeichnet, dass** die bügelförmigen Aufnahmen (10) in ihrer Passivstellung in eine unterhalb der Ladefläche (3) des Lkw (1) horizontal und quer zur Fahrtrichtung (F) montierbare Lagerhülse (14) eingeschoben sind.

7. Zwischenlager-Vorrichtung nach Anspruch 6, **dadurch gekennzeichnet, dass** die Aufnahmebügel (10) am in Aktivstellung oben liegenden, in die Lagerhülse (14) einschiebbaren Ende eines ihrer Schenkel (11) jeweils mit einem Schwenkbolzen (16) versehen sind, der mit einem Schwenkanschlag (24) am Mündungsende (17) der Lagerhülse (14) ein Schwenklager bildet, um das der Aufnahmebügel (10) aus einer aus der Lagerhülse (14) herausgezogenen horizontalen Stellung in seine vertikale Aktivstellung schwenkbar ist.

8. Zwischenlager-Vorrichtung nach Anspruch 6 oder 7, **dadurch gekennzeichnet, dass** jeder der Aufnahmebügel (10) in seiner Passivstellung in der Lagerhülse (14) mittels einer Sicherung (27,28) festlegbar ist.

9. Zwischenlager-Vorrichtung nach Anspruch 8, **dadurch gekennzeichnet, dass** die Sicherung durch einen vor die Basis (13) der Aufnahmebügel (10) über Stecköffnungen (27) durch die Lagerhülse (14) steckbaren Federstift (28) gebildet ist.

10. Zwischenlager-Vorrichtung nach einem der Ansprüche 1, 2, 4, bis 9, **dadurch gekennzeichnet, dass** jedes der bügelförmigen Aufnamen durch einen Dop-pelbügel (10') gebildet ist, der zur Aufnahme von Planen-Brettern (8) in zwei hintereinanderliegenden Reihen Seite an Seite ausgebildet ist.

11. Zwischenlager-Vorrichtung nach Anspruch 4 und 5, **dadurch gekennzeichnet, dass** jede der des bügelförmigen Aufnahmen (10'') an einem Schwenklagerbock (33) um zwei zueinander senkrechte Schwenkachsen (35, 38) derart schwenkbar seitlich unterhalb der Ladefläche (3) des Lkw (1) lagerbar sind, dass die Aufnahmebügel (10") in einer horizontal und parallel zur Fahrrichtung (F) gerichtete Passivstellung positionierbar sind.

12. Zwischenlager-Vorrichtung nach Anspruch 11, **dadurch gekennzeichnet, dass** jeder des Anfnahmebügel (10'') in ihrer Passivstellung durch einen Steckbolzen (40) fixierbar ist, der durch eine hochgeklappte Bordwand (41) der Lkw-Ladefläche (3) gegen ein unbeabsichtigtes Entfernen abgedeckt ist

## Claims

1. Intermediate storage device for lorry tarpaulin boards (8), in which underneath the longitudinal edge of the lorry loading area (3) are provided positionable receptacles (10) which are able to receive a number of tarpaulin boards (8), pointing in the driving direction, for intermediate storage during loading and unloading of the lorry.

2. Intermediate storage device according to claim 1, **characterised in that** a pair of receptacles (10) is assigned to a respective loading field (5) of the loading area (3) in order to receive the number of tarpaulin boards (8) present in this loading field (5) for intermediate storage.

3. Intermediate storage device according to claim 1 or 2, **characterised in that** the receptacles are in each case configured as U-shaped receiving brackets (10) with a narrow basis (13) into which the tarpaulin boards (8) are insertable edgeways and side-by-side between the legs (11, 12) of the receiving brackets (10).

4. Intermediate storage device according to one of the preceding claims, **characterised in that** the receptacles (10) have an active position for intermediate storage of the tarpaulin boards (8) when loading and unloading the lorry and a passive position when the lorry is moving.

5. Intermediate storage device according to claim 4, **characterised in that** the receptacles (10) are mountable to the lorry to be pivotable between a folded-down active position and a folded-up passive position underneath the loading area (3).

6. Intermediate storage device according to claim 4 and 5, **characterised in that** when in their passive position, the bracket-shaped receptacles (10) are inserted into a bearing sleeve (14) which is mountable horizontally and perpendicular to the driving direction (F) underneath the loading area (3) of the lorry.

7. Intermediate storage device according to claim 6, **characterised in that** the receiving brackets (10) are in each case provided with a pivot bolt (16) at the end of one of their legs (11) which is disposed on top when in the active position, said pivot bolt (16) forming a pivot bearing with a pivot stop (24) at the opening end (17) of the bearing sleeve (14), the receiving bracket (10) being pivotable about said pivot bearing from a horizontal position removed from the bearing sleeve (14) and into its vertical active position.

8. Intermediate storage device according to claim 6 or 7, **characterised in that** when in its passive position, each of the receiving brackets (10) is securable in the bearing sleeve (14) by means of a safeguard (27, 28).

9. Intermediate storage device according to claim 8, **characterised in that** the safeguard is formed by a spring pin (28) which is insertable through the bearing sleeve (14) via plug openings (27) in front of the basis (13) of the receiving brackets (10).

10. Intermediate storage device according to one of claims 1, 2, 4 to 9, **characterised in that** each of the bracket-shaped receptacles is formed by a double bracket (10') which is configured such as to receive tarpaulin boards (8) side-by-side in two rows lying one behind the other.

11. Intermediate storage device according to claims 4 and 5, **characterised in that** each of the bracket-shaped receptacles (10'') is supportable on a pivot bearing support laterally below the loading area (3) of the lorry (1) to be pivotable about two pivot axes (35, 3 8), which are perpendicular to each other, in such a way that the receiving brackets (10") are positionable in a passive position which is directed horizontally and parallel to the driving direction (F).

12. Intermediate storage device according to claim 11, **characterised in that** each of the receiving brackets (10") is lockable in its passive position by means of a locking pin (40) which is covered by a folded-up platform gate (41) of the lorry loading area (3) against an accidental removal.

## Revendications

1. Dispositif de stockage temporaire pour des planches latérales (8) de camion, dans lequel il est prévu des logements (10), qui peuvent être positionnés en dessous du bord longitudinal de la plate-forme de chargement (3) du camion et qui peuvent recevoir une pluralité de planches latérales (8) orientées dans le sens de déplacement, en vue de les stocker temporairement pendant le chargement et le déchargement du camion.

2. Dispositif de stockage temporaire selon la revendication 1, **caractérisé en ce qu'**une paire de logements (10) est associée respectivement à une zone de chargement (5) de la plate-forme de chargement (3) et reçoit le nombre de planches latérales (8) présentes dans cette zone de chargement (5), en vue de leur stockage temporaire.

3. Dispositif de stockage temporaire selon la revendication 1 ou 2, **caractérisé en ce que** les logements sont réalisés dans chaque cas sous la forme d'étriers (10) en forme de U avec une base (13) étroite, entre les branches (11, 12) desquels les planches latérales (8) peuvent être insérées en étant positionnées de chant côte à côte.

4. Dispositif de stockage temporaire selon l'une quelconque des revendications précédentes, **caractérisé en ce que** les logements (10) possèdent une position active pour le stockage temporaire des planches latérales (8) lors du chargement et déchargement du camion, et une position passive pendant le déplacement de transport de ce dernier.

5. Dispositif de stockage temporaire selon la revendication 4, **caractérisé en ce que** les logements (10) peuvent être montés sur le camion de manière à pouvoir pivoter entre une position active, rabattue vers le bas, et une position passive, rabattue vers le haut pour être dissimulée en dessous de la plate-forme de chargement (3).

6. Dispositif de stockage temporaire selon les revendications 4 et 5, **caractérisé en ce que** les logements (10) en forme d'étriers sont insérés dans leur position passive dans un fourreau de réception (14) apte à être monté horizontalement et transversalement au sens de déplacement (F) en dessous de la plate-forme de chargement (3) du camion (1).

7. Dispositif de stockage temporaire selon la revendication 6, **caractérisé en ce que** les étriers formant logement (10), au niveau de l'extrémité de l'une de leurs branches (11), à savoir l'extrémité supérieure dans la position active et insérable dans le fourreau de réception (14), sont munis chacun d'un boulon de pivotement (16) qui, conjointement avec une butée de pivotement (24) au niveau de l'extrémité d'entrée (17) du fourreau de réception (14), forme un palier de pivotement autour duquel l'étrier formant logement (10) peut pivoter hors d'une position horizontale, extraite du fourreau de réception (14), dans sa position active verticale.

8. Dispositif de stockage temporaire selon la revendication 6 ou 7, **caractérisé en ce que** chacun des étriers formant logement (10), dans sa position passive, peut être fixé dans le fourreau de réception (14) au moyen d'un dispositif d'immobilisation (27, 28).

9. Dispositif de stockage temporaire selon la revendication 8, **caractérisé en ce que** le dispositif d'immobilisation est formé par une broche à ressort (28), pouvant être enfichée à travers le fourreau de réception (14) devant la base (13) de l'étrier formant logement (10) en passant par des orifices d'enfichage (27).

10. Dispositif de stockage temporaire selon l'une quelconque des revendications 1, 2, 4 à 9, **caractérisé en ce que** chacun des logements en forme d'étrier est formé par un double étrier (10'), qui est conçu pour recevoir les planches latérales (8) côte à côte dans deux rangées disposées l'une derrière l'autre.

11. Dispositif de stockage temporaire selon les revendications 4 et 5, **caractérisé en ce que** chacun des logements (10") en forme d'étrier peut être monté latéralement en dessous de la plate-forme de chargement (3) du camion (1) sur un support de palier de pivotement (33) de manière à pouvoir pivoter autour de deux axes de pivotement (35, 38) perpendiculaires l'un à l'autre, de telle sorte que les étriers formant logement (10") peuvent être positionnés dans une position passive orientée horizontalement et parallèlement au sens de déplacement (F).

12. Dispositif de stockage temporaire selon la revendication 11, **caractérisé en ce que** chacun des étriers formant logement (10") peut être fixé dans sa position passive par un boulon à enficher (40) qui, pour éviter d'être retiré involontairement, est recouvert par une ridelle (41), rabattue vers le haut, de la plate-forme de chargement (3) du camion
